(19)
Europäisches
Patentamt
European
Patent Office
Office européen
des brevets

(11)    **EP 1 947 577 B1**

(12)    **EUROPEAN PATENT SPECIFICATION**

(45) Date of publication and mention
of the grant of the patent:
**14.03.2012   Bulletin 2012/11**

(51) Int Cl.:
***G06F 17/30*** *(2006.01)*

(21) Application number: **08150090.2**

(22) Date of filing: **08.01.2008**

(54) **Method, medium, and system classifying images based on image properties**

Verfahren, Medium und System zum auf Bildeigenschaften basierenden Klassifizieren von Bildern

Procédé, support et système de classification d'images à base de propriétés d'image

(84) Designated Contracting States:
**DE FR GB**

(30) Priority:   **09.01.2007   KR 20070002595**

(43) Date of publication of application:
**23.07.2008   Bulletin 2008/30**

(73) Proprietor: **Samsung Electronics Co., Ltd.
Suwon-si, Gyeonggi-do (KR)**

(72) Inventors:
• **Cho, Min-ki**
**c/o Samsung Advanced Institute of Tech.**
**449-712, Gyeonggi-do (KR)**
• **Kang, Byoung-ho**
**c/o Samsung Advanced Institute of Tech.**
**449-712, Gyeonggi-do (KR)**
• **Choh, Heui-keun**
**c/o Samsung Advanced Institute of Tech.**
**449-712, Gyeonggi-do (KR)**
• **Luo, Ronnier**
**c/o Samsung Advanced Institute of Tech.//**
**449-712, Gyeonggi-do (KR)**

(74) Representative: **Grünecker, Kinkeldey,
Stockmair & Schwanhäusser
Anwaltssozietät
Leopoldstrasse 4
80802 München (DE)**

(56) References cited:
• **ATHITSOS V ET AL: "Distinguishing photographs and graphics on the World Wide Web" CONTENT-BASED ACCESS OF IMAGE AND VIDEO LIBRARIES, 1997. PROCEEDINGS I EEE WORKSHOP ON SAN JUAN, PUERTO RICO 20 JUNE 1997, LOS ALAMITOS, CA, USA,IEEE COMPUT. SOC, US, 1 January 1997 (1997-01-01), pages 10-17, XP010252098 ISBN: 978-0-8186-7981-0**
• **YUANHAO CHEN ET AL: "Automatic Classification of Photographs and Graphics" MULTIMEDIA AND EXPO, 2006 IEEE INTERNATIONAL CONFERENCE ON, IEEE, PI, 1 July 2006 (2006-07-01), pages 973-976, XP031033000 ISBN: 978-1-4244-0366-0**
• **SCHETTINI R ET AL: "AUTOMATIC CLASSIFICATION OF DIGITAL PHOTOGRAPHS BASED ON DECISION FORESTS" INTERNATIONAL JOURNAL OF PATTERN RECOGNITION AND ARTIFICIAL INTELLIGENCE, WORLD SCIENTIFIC PUBLISHING, SINGAPORE, SI, vol. 18, no. 5, 1 August 2004 (2004-08-01), pages 819-845, XP001217308 ISSN: 0218-0014**

**Description**

CROSS-REFERENCE TO RELATED APPLICATIONS

This application claims priority from Korean Patent Application No. 10-2007-0002595 filed on January 9, 2007 in the Korean Intellectual Property Office.

BACKGROUND

1. Field

One or more embodiments of the present invention relate to image processing techniques, and in particular, to a method, medium, and system classifying input images into one of a business graphic image and photo image in color calibration.

2. Description of the Related Art

Color calibration is typically performed to adjust output characteristics of a display device to match reference colors or those of other devices and is widely used in the attempt to exactly display colors to be printed. For example, since colors are displayed on a monitor using RGB (red, green, and blue) colors, such color calibration typically needs to be performed to print an image displayed on the monitor by a printer that uses CMYK (cyan, magenta, yellow, and black) ink. This color calibration is performed on the basis of a color lookup table.

Generally, color input/output devices, such as a monitor, a scanner, a camera, a printer, etc., which express colors, use different color spaces or different color models, depending on their respective applications. In the case of a color image, printing devices typically use a CMY or CMYK color space, a color CRT (Cathode Ray Tube) monitor or a computer graphic device may use a RGB color space, and devices that should process color, saturation, and lightness may use an HIS color space. Further, a CIE color space is used to define a so-called device-independent color that can be desirably exactly displayed on any device. For example, CIEXYZ, CIELab, and CIELuv color spaces may be such device-independent color spaces. Each of the color input/output devices may use a different expressible color range, that is, a color gamut, in addition to a different color space. Thus, due to such potential differences in the color gamut, the same color image may still be seen differently on different color input/output devices.

The CIELab color model is based on an initial color model proposed by CIE (Commission Internationale de l'Eclairage) as an international standard for color measurement. The CIELab color model is device-independent. That is, the same color may be displayed, regardless of the devices, such as, a monitor, a printer, and a computer, which are used to form or output an image. The CIELab color model is made up of luminosity, that is, a lightness component L and two color tone components a and b. The color tone component a exists between green and red, and the color tone component b exists between blue and yellow.

Further, since Windows Vista™ has recently emerged, a CIECAM02 color space has been proposed as the color space for color matching, in addition to the existing CIELab color space. This CIECAM02 color space attempts to exactly model a human's visual characteristics and reflect an observation environment, compared with the CIELab color space. That is, in an existing color management system (hereinafter, referred to as "CMS") of an operating system, a light source for observation may be limited to D50 for color matching of a display and a printer, for example. However, since Windows Vista™ supports the CIECAM02 color space, in such an operating system it is possible to compare and observe an image under various kinds of illumination, such as a D65 light source, an F light source, and an A light source, in addition to the D50 light source.

Meanwhile, the International color consortium (ICC; http://www.color.org) has also proposed the application of different color gamut mapping technique according to rendering intents. These rendering intents may include a perceptual intent, a relative colorimetric intent, and a saturated intent, for example. In order to adaptively apply the two intents other than the relative colorimetric intent according to an image, first, it may be necessary to judge whether the image is a business graphic image or a general photo image. Of course, in the case of the relative colorimetric intent, the above-described judgment may be needed to acquire an intended visually excellent image for minimizing chrominance.

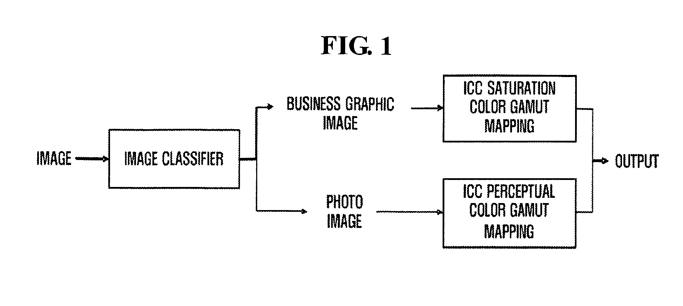

FIG. 1 shows a classifying of a given image into a business graphic image or a photo image through an image classification unit and applying an appropriate color gamut mapping technique to the classified image. As shown in FIG. 1, the input image may be classified into the business graphic image or the photo image by the image classification unit. Thereafter, it is possible to obtain an output image having an intended excellent image quality by applying an optimized color gamut mapping technique according to the image classification. That is, an ICC saturation gamut mapping technique may be applied to an input image classified into a business graphic image and an ICC perceptual gamut mapping technique may be applied to an input image classified as a photo image.

However, in order to improve the output image by applying the appropriate color gamut mapping technique, appropriate image classification by the image classification unit needs to be performed. Accordingly, there is a need for a technique/process/system that can classify characteristics of an input image through various analyses, such as, a lightness distribution analysis, a saturation analysis, and an edge analysis from image information, as described in greater detail below.

SUMMARY

The invention provides a system according to claim 1, a method according to claim 10 and a medium according to claim 19.

An aspect of one or more embodiments of the present invention is to provide a method, medium, and system classifying an input image into a business graphic image or a photo image with exactness.

Additional aspects and/or advantages will be set forth in part in the description which follows and, in part, will be apparent from the description, or may be learned by practice of the invention.

To achieve the above and/or other aspects and advantages, embodiments of the present invention include a system classifying an input image as at least one of a business graphic image and a photo image, the system including a lightness analysis unit to calculate a lightness frequency distribution of lightness components for the input image, a saturation analysis unit to calculate an average of saturation components among saturation components for the input image, and an image classification unit to classify the input image as one of the business graphic image and the photo image based on a comparison of an estimation function, based on the calculated lightness frequency distribution and the average of the saturation components, and a threshold value, and to output a result of the classification.

To achieve the above and/or other aspects and advantages, embodiments of the present invention include a method classifying an input image as at least one of a business graphic image and a photo image, the method including calculating a lightness frequency distribution of lightness components for the input image, calculating an average of saturation components for the input image, and classifying the input image as one of the business graphic image and the photo image based on a comparing of an estimation function, based on the calculated lightness frequency distribution and the average of the saturation components, and a threshold value, and outputting a result of the classification.

To achieve the above and/or other aspects and advantages, embodiments of the present invention include at least one medium including computer readable code to control at least one processing element to implement a method classifying an input image as at least one of a business graphic image and a photo image, the method including calculating a lightness frequency distribution of lightness components for the input image, calculating an average of saturation components for the input image, and classifying the input image as one of the business graphic image and the photo image based on a comparing of an estimation function, based on the calculated lightness frequency distribution and the average of the saturation components, and a threshold value, and outputting a result of the classification.

BRIEF DESCRIPTION OF THE DRAWINGS

These and/or other aspects and advantages will become apparent and more readily appreciated from the following description of the embodiments, taken in conjunction with the accompanying drawings of which:

FIG. 1 illustrates a classifying of an input image and an applying of a color gamut mapping to the classified image;
FIG. 2 illustrates an image classification system, based on image properties, according to an embodiment of the present invention;
FIG. 3 illustrates a process of transforming RGB data of an input image into data of a CIELab color space, according to an embodiment of the present invention;
FIG. 4 illustrates a process of transforming RGB data of an input image into data of a CIECRM02 color space, according to an embodiment of the present invention;
FIG. 5 illustrates a basic concept of multi-layer perceptron, according to an embodiment of the present invention; and
FIG. 6 illustrates a method of classifying an image based on image properties, according to an embodiment of the present invention.

DETAILED DESCRIPTION OF THE EMBODIMENTS

Reference will now be made in detail to embodiments, examples of which are illustrated in the accompanying drawings, wherein like reference numerals refer to like elements throughout. In this regard, embodiments of the present invention may be embodied in many different forms and should not be construed as being limited to embodiments set forth herein. Accordingly, embodiments are merely described below, by referring to the figures, to explain aspects of the present invention.

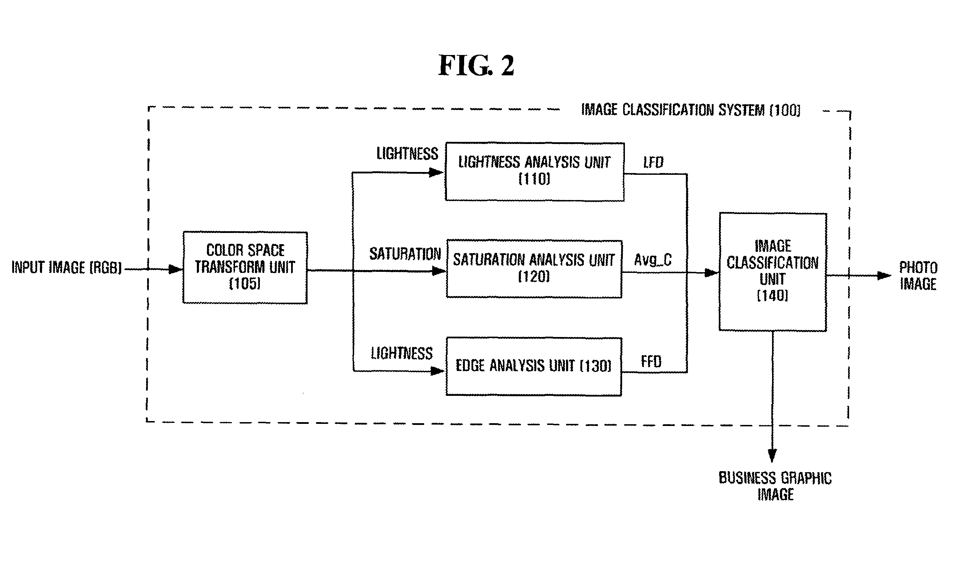

FIG. 2 illustrates an image classification system 100, based on image properties, according to an embodiment of the present invention. The image classification system 100 may include a color space transform unit 105, a lightness analysis unit 110, a saturation analysis unit 120, an edge analysis unit 130, and an image classification unit 140, for example.

The color space transform unit 105 may transform RGB data of an input image into a color space made up of lightness and saturation components, for example. In an embodiment, as the color space, the above-described CIELab or CIECAM02 color space may be exemplified.

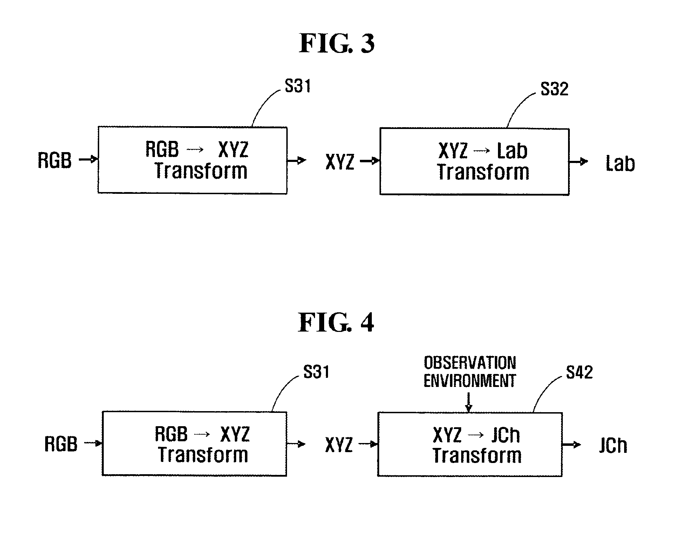

FIG. 3 illustrates a process of transforming RGB data of an input image into data of a CIELab color space. The RGB data typically cannot be directly transformed into Lab data, and a transform process into XYZ data (data on a CIEXYZ color space) is typically desired. That is, such a process of transforming the RGB data into the Lab data may include a transforming of the RGB data into the XYZ data, in operation S31, and a transforming of the XYZ data into the Lab data, in operation S32. Here, Operation S31 may be performed by measuring RGB patches to be displayed by a colorimetric device so as to acquire the XYZ data, for example. Alternatively, in operation S31, the RGB data may be transformed into the XYZ data by an sRGB model, noting that alternatives are also available. Details of such a technique are further described in "Color Management Default RGB Color Space sRGB" (IEC TC-1 00, IEC 61966-2-1, 1999). Here, the RGB data is transformed into rR, rG, and rB components and then transformed to the XYZ data by a specific transform matrix.

In operation S32, the XYZ data may be transformed into the Lab data according to the below Equation 1, for example.

### Equation 1:

$$L = 116 \times f(Y/Y_n) - 16$$
$$a = 500\left[(X/X_n)^{1/3} - (X/Y_n)^{1/3}\right]$$
$$b = 200\left[(Y/Y_n)^{1/3} - (Z/Z_n)^{1/3}\right]$$
$$if, f(\alpha) > 0.008856, f(\alpha) = \alpha^3$$
$$else, f(\alpha) = 7.787\alpha + 16/116$$

Here, reference symbol L denotes lightness, reference symbol a denotes redness-greenness (color between red and green), and reference symbol b denotes yellowness-blueness (color between blue and yellow).

Meanwhile, FIG. 4 illustrates a process of transforming RGB data of an input image into data (JCh data) of a CIECAM02 color space. This process includes a transforming of the RGB data of the input image into XYZ data, in operation S31, and a transforming of the XYZ data into the JCh data, in operation S41. In the JCh data, reference symbol J denotes lightness, reference symbol C denotes saturation, and reference symbol h denotes color. Here, operation S31 may be the same or similar as that shown in FIG. 3. However, in operation S41, a technique described in "The CIECAM02 Color Appearance Model" (Nathan Moroney, Mark Fairchild, Robert Hunt, Changjun Li, Ronnier Luo and Todd Newman, IS&T/SID 10th Color Imaging Conference) may be used. This transforming of the XYZ data into the JCh data includes using CIEXYZ of reference white, reference white in reference conditions, photo luminance of an adapting field, background luminance factors, surround parameters, and background parameters.

Referring to FIG. 2 again, the color space transform unit 105 may supply the transformed data (e.g., Lab data or JCh data) of the lightness-saturation space to the lightness analysis unit 110, the saturation analysis unit 120, and the edge analysis unit 130, for example.

The lightness analysis unit 110 may calculate a lightness frequency distribution (hereinafter, referred to as "LFD") of the input image, e.g., using the lightness components supplied from the color space transform unit 105. The LFD is an index that indicates how continuously the lightness components are distributed in the entire range. Such an LFD may be calculated using the below Equation 2, for example.

Equation 2:

$$LFD = \frac{\sum (num\_L_i - num\_L_{i+1})^2}{\sum (num\_L_i)^2}$$

Here, reference symbol $L_i$ denotes an i-th lightness component of the Lab image and reference symbol num_ $L_i$ denotes a frequency of the reference symbol $L_i$. When it is assumed that i is in a range of 0 to N, $L_0$ corresponds to a value of a darkest lightness component and $L_N$ corresponds to a value of a brightest lightness component. According to Equation 2, the more the occurrence frequency is similar between similar (adjacent) lightness components L, and $L_{i+1}$, the smaller the LFD becomes. Otherwise, the LFD increases. That is, the LFD is relatively smaller in a general photo image but becomes relatively larger in a business graphic image.

The saturation analysis unit 120 may calculate an average Avg_C of the saturation components, e.g., as supplied from the color space transform unit 105. This average corresponds to an average of saturation of all, for example, pixels in the Lab image or an average of saturation of pixels of an image sampled from the Lab image. The saturation of the Lab image may be generally calculated by the below Equation 3, for example.

Equation 3:

$$C = \sqrt{a^2 + b^2}$$

Generally, the average Avg_C of the saturation components of the photo image is higher than that of the business graphic image. Therefore, the characteristics of the input image may be estimated using the average of the saturation components, for example.

The edge analysis unit 130 may calculate the frequency distribution of the lightness components, e.g., as supplied from the color space transform unit 105. In particular, the edge analysis unit 130 may calculate a Fourier frequency distribution (hereinafter, referred to as "FFD") of the input image using the lightness components supplied from the color space transform unit 105, for example. Here, the frequency distribution corresponds to a distribution of an image that is obtained by performing frequency conversion, for example, discrete cosine conversion, with respect to the image expressed by the lightness components. Generally, a relatively large number of high-frequency components are present in the business graphic image while a relatively large number of low-frequency components are present in the photo image. Therefore, in the frequency distribution obtained by performing frequency conversion on the input image, the photo image typically shows various frequency components including the low-frequency components but the business graphic image typically mainly shows the high-frequency components.

The FFD that classifies the above-described properties may be calculated by the below Equation 4, for example.

Equation 4:

$$FFD = \frac{\sum (num\_A_i - num\_A_{i+1})^2}{\sum (num\_A_i)^2}$$

Here, reference symbol $A_i$ denotes an i-th frequency component of the Lab image (for example, a frequency component with respect to L) and reference symbol num_$A_i$ denotes a frequency of $A_i$. When it is assumed that i is in a range of 0 to M, $A_0$ corresponds to a value of a lowest frequency component and $A_M$ corresponds to a value of a highest frequency component value. According to Equation 4, the more the occurrence frequency is similar between similar (adjacent) frequency components $A_i$ and $A_{i+1}$, the smaller the FFS becomes. Otherwise, the FFD becomes larger. Accordingly, the FFD typically becomes relatively smaller when the input image is a photo image, and becomes relatively larger when the input image is a business graphic image.

In an embodiment, the image classification unit 140 may compare the calculated LFD, average Avg_C, and FFD and predetermined threshold values so as to finally judge which of the business graphic image or the photo image the input image should be classified as. However, if the threshold values are correspondingly set for the three parameters, for example, a different judgment may be performed. With three parameters, it may be desirable to combine the three parameters and set one threshold value, for example. To this end, in an embodiment, the image classification unit 140 may calculate one estimation function, which includes the three parameters, using a neural network algorithm, for example, and set one threshold value with respect to the estimation function. Thus, in this example, the image classification unit 140 may classify the input image as being one of the business graphic image or the photo image by judging whether the estimation function exceeds or meets the threshold value.

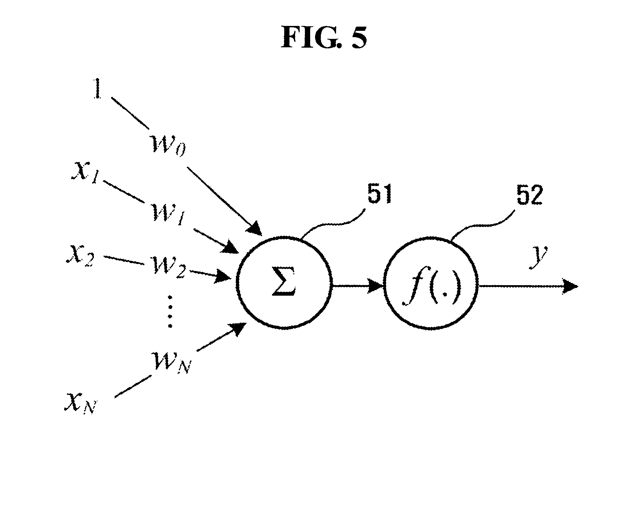

A multi-layer perceptron neural network is the most widely used neural network algorithms among the differing neural network algorithms, and may at least similarly be used in an embodiment of the present invention. Here, FIG. 5 illustrates a basic concept of the multi-layer perceptron. As shown, an input vector has n parameters $X_1$ to $X_n$ and a momentum constant (e.g., 1 is defined) as a bias item. Individual input values may then be multiplied by a weight w, and added by an adder 51. A simple function f(x) 52 may then be applied, for example. This simple function may be known as an execution function or an estimation function.

The resultant neuron y, e.g., calculated through the above-described process, may be represented by the below Equation 5, for example.

### Equation 5:

$$y = f\left(w_0 + x_1 * w_1 + \ldots + x_n * w_n\right)$$

Similar to such an embodiment of the present invention, if the three parameters LFD, Avg_C, and FFD are used, n = 3, and $x_1$ to $x_3$ correspond to LFD, Avg_C, and FFD, respectively. Further, the estimation function f(x) of Equation 5 may be defined by various ways, such as a sigmoid function shown in the below Equation 6, for example.

### Equation 6:

$$f(u) = 1 / (1 + e^{-u})$$

Accordingly, the multilayer perceptron neural network may be trained with respect to a plurality of input images by adapting the weights. In such a training, the output of the neural network may be compared with a desired output, the difference between the two signals used to adapt the weight, and the adaptation ratio controlled by a learning rate, for example.

The estimation function converged through the learning may exist, for example, between 0 and 1. If a user designates 0 as the photo image and 1 as the business graphic image, the input image may be classified with 0.5, for example, as the threshold value with respect to the estimation function. That is, if the converged estimation function is equal to or less than 0.5, for example, the input image may be classified into the photo image, and, if the converged estimation function is larger than 0.5, again for example, the input image may be classified into the business graphic image.

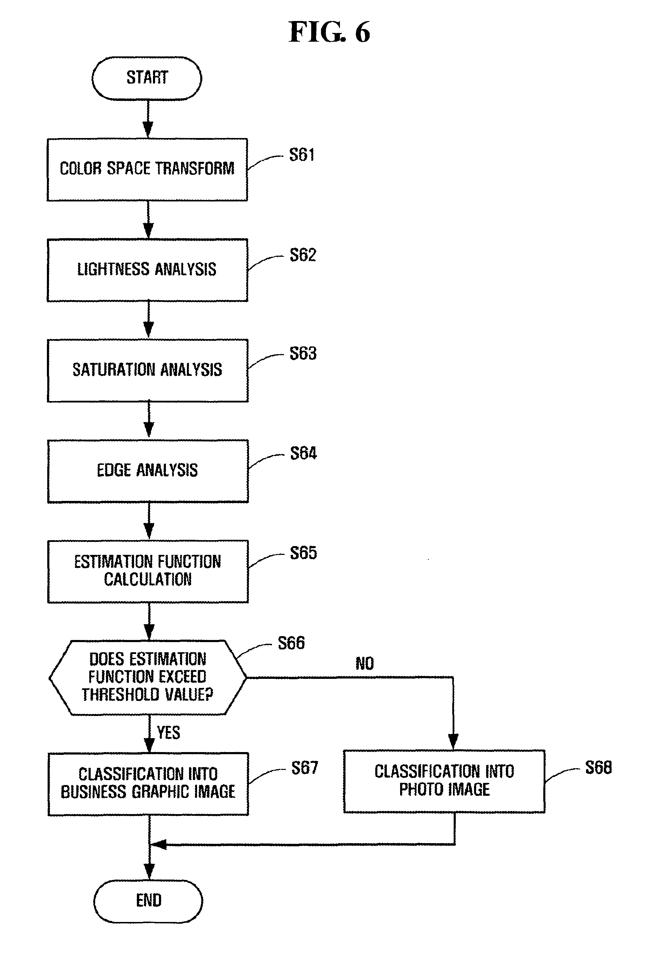

FIG. 6 illustrates a method of classifying an image based on image properties, according to an embodiment of the present invention.

An input RGB image, for example, may be transformed into components of a lightness-saturation color space, e.g., by the color space transform unit 105, in operation S61. Here, for example, the lightness-saturation color space corresponds to a color space that can express lightness and saturation, such as a CIELab color space or a CIECAM02 color space, noting that alternative color spaces are equally available.

The lightness frequency distribution of the lightness components, e.g., from among the components transformed by the color space transform unit 105, may be calculated, e.g., by the lightness analysis unit 110, in operation S62. At this time, for example, as described above regarding Equation 2, the lightness frequency distribution may be calculated using the difference in frequency between adjacent lightness components.

Further, an average of the saturation components, e.g., from among the components transformed by the color space transform unit 105, may be calculated, by the saturation analysis unit 120, in operation S63. In an embodiment, when the input RGB image is transformed into the CIELab color space, the saturation may be found according to Equation 3, for example.

The frequency distribution of the lightness components, e.g., from among the components transformed by the color space transform unit 105, may further be calculated, e.g., by the edge analysis unit 130, in operation S64. In particular, in an embodiment, the lightness components, from among the transformed components, may be transformed into the frequency region and the difference in frequency between adjacent frequency components in the frequency region may be calculated, such as described above regarding Equation 4, for example.

The estimation function may further be calculated, e.g., by the image classification unit 140, using the calculated lightness frequency distribution, the average of the saturation components, and the frequency distribution, in operation S65, for example. In an embodiment, in order to calculate the estimation function, a neural network algorithm may be applied. Further, it may be judged whether the estimation function exceeds or meets a predetermined threshold value, in operation S66, so as to classify the input image as either the business graphic image, in operation S67, or the photo image, in operation S68.

Hereinbefore, each component of FIG. 2, for example, may be implemented by a software component, such as a task, a class, a subroutine, a process, an object, an execution thread, or a program, which may be performed in a predetermined area of a memory, a hardware component, such as Field Programmable Gate Array (FPGA) or Application Specific Integrated Circuit (ASIC), or a combination of the software and/or hardware components, for example.

In addition, each block of example flowchart illustrations may represent a module, segment, or portion of code, which includes one or more executable instructions for implementing the specified logical function(s). It should also be noted that in some alternative implementations, the operations noted in the blocks may occur out of the order. For example, two blocks shown in succession may in fact be executed substantially concurrently and/or the blocks may sometimes be executed in the reverse order, depending upon the operation involved.

With this in mind, and in addition to the above described embodiments, embodiments of the present invention can also be implemented through computer readable code/instructions in/on a medium, e.g., a computer readable medium, to control at least one processing element to implement any above described embodiment. The medium can correspond to any medium/media permitting the storing and/or transmission of the computer readable code, and may actually be the at least one processing element. The medium may further be an example of a system embodiment.

The computer readable code can be recorded/transferred on a medium in a variety of ways, with examples of the medium including recording media, such as magnetic storage media (e.g., ROM, floppy disks, hard disks, etc.) and optical recording media (e.g., CD-ROMs, or DVDs), and transmission media such as media carrying or including carrier waves, as well as elements of the Internet, for example. Thus, the medium may be such a defined and measurable structure including or carrying a signal or information, such as a device carrying a bitstream, for example, according to embodiments of the present invention. The media may also be a distributed network, so that the computer readable code is stored/transferred and executed in a distributed fashion. Still further, as only an example, the processing element could include a processor or a computer processor, and processing elements may be distributed and/or included in a single device.

According to one ore more the embodiments of the present invention, a given image may be automatically classified as one of a business graphic image and a photo image through lightness distribution, saturation, and edge analyses from image information. Further, the classification may be applied to an image processing technique or to optimum color reproduction as an integral part of an output device/system, such as a printer or the like, e.g., the above described system may be a printer. In one embodiment, in an experiment, it was found that it may further be preferable that the lightness distribution analysis and the saturation analysis are included in a system, with the edge analysis being selectively added, if desired.

While aspects of the present invention has been particularly shown and described with reference to differing embodiments thereof, it should be understood that these exemplary embodiments should be considered in a descriptive sense only and not for purposes of limitation. Any narrowing or broadening of functionality or capability of an aspect in one embodiment should not considered as a respective broadening or narrowing of similar features in a different embodiment, i.e., descriptions of features or aspects within each embodiment should typically be considered as available for other similar features or aspects in the remaining embodiments.

Thus, although a few embodiments have been shown and described, it would be appreciated by those skilled in the art that changes may be made in these embodiments without departing from the principles of the invention, the scope of which is defined in the claims.

**Claims**

1.  A system (100) classifying an input image as at least one of a business graphic image and a photo image, the system comprising:

    a lightness analysis unit (110) to calculate a lightness frequency distribution of lightness components for the input image;
    a saturation analysis unit (120) to calculate an average of saturation components among saturation components for the input image; and
an image classification unit (140) to classify the input image as one of the business graphic image and the photo image based on a comparison of the result of an estimation function, based on the calculated lightness frequency distribution and the average of the saturation components, with a threshold value, and to output a result of the classification.

2. The system of claim 1, further comprising a color space transform unit (105) to transform the input image into components of a lightness-saturation color space to generate at least the lightness components for the input image and the saturation components for the input image.

3. The system of claim 1, further comprising an edge analysis unit (130) to calculate a frequency distribution of the lightness components for the input image, and
wherein the classifying of the input image by the image classification unit is further based on the calculated frequency distribution.

4. The system of claim 3, wherein the edge analysis unit is adapted to transform the lightness components for the input image into a frequency region and calculate a difference in frequency between adjacent frequency components in the frequency region.

5. The system of claim 1, wherein the input image is an RGB image.

6. The system of claim 5, wherein the system is adapted such that the lightness components for the input image and the saturation components for the input image result from a transforming of the RGB image to a lightness-saturation color space, with the lightness-saturation color space being a CIELab color space or a CIECAM02 color space.

7. The system of claim 1, wherein the lightness analysis unit (110) is adapted to calculate a difference in frequency between adjacent lightness components for the input image.

8. The system of claim 1, wherein the system is adapted to calculate a saturation component for the input image based upon a square root of a value obtained by adding a square of an "a" component and a square of a "b" component among Lab data of a CIELab color space.

9. The system of claim 1, wherein the image classification unit is adapted to identify the estimation function by applying a neural network algorithm.

10. A method classifying an input image as at least one of a business graphic image and a photo image, the method comprising:

   calculating (S62) a lightness frequency distribution of lightness components for the input image;
   calculating (S63) an average of saturation components for the input image; and
   classifying the input image as one of the business graphic image (567) and the photo image (568) based on a comparing the result of an estimation function (566) based on the calculated lightness frequency distribution and the average of the saturation components, with a threshold value, and outputting a result of the classification.

11. The method of claim 10, further comprising transforming (S61) the input image into components of a lightness-saturation color space to generate at least the lightness components for the input image and the saturation components for the input image.

12. The method of claim 10, further comprising calculating a frequency distribution of the lightness components for the input image, and
wherein the classifying of the input image is further based on the calculated frequency distribution.

13. The method of claim 12, wherein the calculating of the frequency distribution comprises:

   transforming the lightness components for the input image into a frequency region; and
   calculating a difference in frequency between adjacent frequency components in the frequency region.

14. The method of claim 10, wherein the input image is an RGB image.

15. The method of claim 14, wherein the lightness components for the input image and the saturation components for the input image result from a transforming of the RGB image to a the lightness-saturation color space, with the lightness-saturation color space being a CIELab color space or a CIECAM02 color space.

16. The method of claim 10, wherein the calculating of the lightness frequency distribution includes calculating a difference in frequency between adjacent lightness components for the input image.

17. The method of claim 10, wherein a saturation component for the input image is calculated based upon a square root of a value obtained by adding a square of an "a" component and a square of a "b" component among Lab data of a CIELab color space.

18. The method of claim 10, wherein, in the classifying of the input image, the estimation function is identified by applying a neural network algorithm.

19. At least one medium comprising computer readable code to control at least one processing element to implement a method classifying an input image as at least one of a business graphic image and a photo image, the method comprising:

calculating a lightness frequency distribution of lightness components for the input image;
calculating an average of saturation components for the input image; and
classifying the input image as one of the business graphic image and the photo image based on a comparing of an estimation function, based on the calculated lightness frequency distribution and the average of the saturation components, with a threshold value, and outputting a result of the classification.

20. The medium of claim 19, wherein the method further comprises transforming the input image into components of a lightness-saturation color space to generate at least the lightness components for the input image and the saturation components for the input image.

**Patentansprüche**

1. System (100) zum Klassifizieren eines Eingangsbildes entweder als ein Geschäftsgrafik-Bild oder/und ein Foto-Bild, wobei das System umfasst:

eine Helligkeits-Analyseeinheit (110) zum Berechnen einer Helligkeits-Frequenzverteilung von Helligkeits-Komponenten für das Eingangsbild;
eine Sättigungs-Analyseeinheit (120) zum Berechnen eines Mittelwertes von Sättigungs-Komponenten von Sättigungs-Komponenten für das Eingangsbild; und
eine Bild-Klassifizierungseinheit (140) zum Klassifizieren des Eingangsbildes als das Geschäftsgrafik-Bild oder das Foto-Bild auf Basis eines Vergleichs des Ergebnisses einer Schätzfunktion, die auf der berechneten Helligkeits-Frequenzverteilung und dem Mittelwert der Sättigungs-Komponenten basiert, mit einem Schwellenwert sowie zum Ausgeben eines Ergebnisses der Klassifizierung.

2. System nach Anspruch 1, das des Weiteren eine Farbraum-Umwandlungseinheit (105) umfasst, mit der das Eingangsbild in Komponenten eines Helligkeits-Sättigungs-Farbraums umgewandelt wird, um wenigstens die Helligkeits-Komponenten für das Eingangsbild und die Sättigungs-Komponenten für das Eingangsbild zu erzeugen.

3. System nach Anspruch 1, das des Weiteren eine Kanten-Analyseeinheit (130) zum Berechnen einer Frequenzverteilung der Helligkeits-Komponenten für das Eingangsbild umfasst, und
wobei das Klassifizieren des Eingangsbildes durch die Bild-Klassifizierungseinheit des Weiteren auf der berechneten Frequenzverteilung basiert.

4. System nach Anspruch 3, wobei die Kanten-Analyseeinheit so eingerichtet ist, dass sie die Helligkeits-Komponenten für das Eingangsbild in einen Frequenzbereich umwandelt und eine Frequenzdifferenz zwischen benachbarten Frequenz-Komponenten in dem Frequenzbereich berechnet.

5. System nach Anspruch 1, wobei das Eingangsbild ein RGB-Bild ist.

**6.** System nach Anspruch 5, wobei das System so eingerichtet ist, dass die Helligkeits-Komponenten für das Eingangsbild und die Sättigungs-Komponenten für das Eingangsbild aus einer Umwandlung des RGB-Bildes in einen Helligkeits-Sättigungs-Farbraum resultieren, wobei der Helligkeits-Sättigungs-Farbraum ein CIELab-Farbraum oder ein CIECAM02-Farbraum ist.

**7.** System nach Anspruch 1, wobei die Helligkeits-Analyseeinheit (110) so eingerichtet ist, dass sie eine Frequenzdifferenz zwischen benachbarten Helligkeits-Komponenten für das Eingangsbild berechnet.

**8.** System nach Anspruch 1, wobei das System so eingerichtet ist, dass es eine Sättigungs-Komponente für das Eingangsbild auf Basis einer Quadratwurzel eines Wertes berechnet, der ermittelt wird, indem ein Quadrat einer "a"-Komponente und ein Quadrat einer "b"-Komponente von Lab-Daten eines CIELab-Farbraums addiert werden.

**9.** System nach Anspruch 1, wobei die Bild-Klassifizierungseinheit so eingerichtet ist, dass sie die Schätzfunktion identifiziert, indem sie einen Algorithmus eines neuronalen Netzes anwendet.

**10.** Verfahren zum Klassifizieren eines Eingangsbildes als ein Geschäftsgrafik-Bild oder/und ein Foto-Bild, wobei das Verfahren umfasst:

Berechnen (S62) einer Helligkeits-Frequenzverteilung von Helligkeits-Komponenten für das Eingangsbild;
Berechnen (S63) eines Mittelwertes von Sättigungs-Komponenten für das Eingangsbild; und
Klassifizieren des Eingangsbildes als das Geschäftsgrafik-Bild (567) oder das Foto-Bild (568) auf Basis eines Vergleichs eines Ergebnisses einer Schätzungsfunktion, die auf der berechneten Helligkeits-Frequenzverteilung und dem Mittelwert der Sättigungs-Komponenten basiert, mit einem Schwellenwert, sowie Ausgeben eines Ergebnisses der Klassifizierung.

**11.** Verfahren nach Anspruch 10, das des Weiteren umfasst, dass das Eingangsbild in Komponenten eines Helligkeits-Sättigungs-Farbraums umgewandelt wird (S61), um wenigstens die Helligkeits-Komponenten für das Eingangsbild und die Sättigungs-Komponenten für das Eingangsbild zu erzeugen.

**12.** Verfahren nach Anspruch 10, das des Weiteren Berechnen einer Frequenzverteilung der Helligkeits-Komponenten für das Eingangsbild umfasst, und
wobei das Klassifizieren des Eingangsbildes des Weiteren auf der berechneten Frequenzverteilung basiert.

**13.** Verfahren nach Anspruch 12, wobei das Berechnen der Frequenzverteilung umfasst:

Umwandeln der Helligkeits-Komponenten für das Eingangsbild in einen Frequenzbereich; und
Berechnen einer Frequenzdifferenz zwischen benachbarten Frequenz-Komponenten in dem Frequenzbereich.

**14.** Verfahren nach Anspruch 10, wobei das Eingangsbild ein RGB-Bild ist.

**15.** Verfahren nach Anspruch 14, wobei das System so eingerichtet ist, dass die Helligkeits-Komponenten für das Eingangsbild und die Sättigungs-Komponenten für das Eingangsbild aus einer Umwandlung des RGB-Bildes in einen Helligkeits-Sättigungs-Farbraum resultieren, wobei der Helligkeits-Sättigungs-Farbraum ein CIELab-Farbraum oder ein CIECAM02-Farbraum ist.

**16.** Verfahren nach Anspruch 10, wobei das Berechnen der Helligkeits-Frequenzverteilung Berechnen einer Frequenzdifferenz zwischen benachbarten Helligkeits-Komponenten für das Eingangsbild umfasst.

**17.** Verfahren nach Anspruch 10, wobei eine Sättigungs-Komponente für das Eingangsbild auf Basis einer Quadratwurzel eines Wertes berechnet wird, der ermittelt wird, indem ein Quadrat einer "a"-Komponente und ein Quadrat einer "b"-Komponente von Lab-Daten eines CIELab-Farbraums addiert werden.

**18.** Verfahren nach Anspruch 10, wobei beim Klassifizieren des Eingangsbildes die Schätzfunktion identifiziert wird, indem ein Algorithmus eines neuronalen Netzes angewendet wird.

**19.** Wenigstens ein Medium, das computerlesbaren Code umfasst, mit dem wenigstens ein Verarbeitungselement so gesteuert wird, dass es das Verfahren zum Klassifizieren eines Eingangsbildes als ein Geschäftsgrafik-Bild oder/und ein Foto-Bild implementiert, wobei das Verfahren umfasst:

Berechnen einer Helligkeits-Frequenzverteilung von Helligkeits-Komponenten für das Eingangsbild;

Berechnen eines Mittelwertes von Sättigungs-Komponenten für das Eingangsbild; und

Klassifizieren des Eingangsbildes als das Geschäftsgrafik-Bild oder das Foto-Bild auf Basis eines Vergleichs einer Schätzfunktion, die auf der berechneten Helligkeits-Frequenzverteilung und dem Mittelwert der Sättigungs-Komponenten basiert, mit einem Schwellenwert sowie Ausgeben eines Ergebnisses der Klassifizierung.

20. Verfahren nach Anspruch 19, wobei das Verfahren des Weiteren umfasst, dass das Eingangsbild in Komponenten eines Helligkeits-Sättigungs-Farbraums umgewandelt wird, um wenigstens die Helligkeits-Komponenten für das Eingangsbild und Sättigungs-Komponenten für das Eingangsbild zu erzeugen.

**Revendications**

1. Système (100) classifiant une image d'entrée comme au moins l'une parmi une image graphique commerciale et une image photographique, le système comprenant :

   une unité d'analyse de luminosité (110) pour calculer une distribution de fréquence de luminosité de composants de luminosité pour l'image d'entrée ;

   une unité d'analyse de saturation (120) pour calculer une moyenne de composants de saturation parmi des composants de saturation pour l'image d'entrée ; et

   une unité de classification d'image (140) pour classifier l'image d'entrée comme l'une parmi l'image graphique commerciale et l'image photographique en fonction de la comparaison du résultat d'une fonction d'estimation, en se fondant sur la distribution de fréquence de luminosité calculée et la moyenne des composants de saturation, avec une valeur seuil, et pour sortir un résultat de la classification.

2. Système selon la revendication 1, comprenant en outre une unité de transformation d'espace de couleur (105) pour transformer l'image d'entrée en des composants d'un espace de couleur luminosité-saturation pour générer au moins les composants de luminosité pour l'image d'entrée et les composants de saturation pour l'image d'entrée.

3. Système selon la revendication 1, comprenant en outre une unité d'analyse de bord (130) pour calculer une distribution de fréquence des composants de luminosité pour l'image d'entrée, et

   dans lequel la classification de l'image d'entrée par l'unité de classification d'image est en outre fondée sur la distribution de fréquence calculée.

4. Système selon la revendication 3, dans lequel l'unité d'analyse de bord est adaptée pour transformer les composants de luminosité pour l'image d'entrée dans une zone de fréquence et pour calculer une différence de fréquence entre des composants de fréquence adjacents dans la zone de fréquence.

5. Système selon la revendication 1, dans lequel l'image d'entrée est une image RVB.

6. Système selon la revendication 5, dans lequel le système est adapté de telle sorte que les composants de luminosité pour l'image d'entrée et les composants de saturation pour l'image d'entrée résultent d'une transformation de l'image RVB dans un espace de couleur luminosité-saturation, l'espace de couleur luminosité-saturation étant un espace de couleur CIELab ou un espace de couleur CIECAM02.

7. Système selon la revendication 1, dans lequel l'unité d'analyse de luminosité (110) est adaptée pour calculer une différence de fréquence entre des composants de luminosité adjacents pour l'image d'entrée.

8. Système selon la revendication 1, dans lequel le système est adapté pour calculer un composant de saturation pour l'image d'entrée en fonction d'une racine carrée d'une valeur obtenue en ajoutant un carré d'un composant « a » et un carré d'un composant « b » parmi des données Lab d'un espace de couleur CIELab.

9. Système selon la revendication 1, dans lequel l'unité de classification d'image est adaptée pour identifier la fonction d'estimation en appliquant un algorithme de réseau neuronal.

10. Procédé classifiant une image d'entrée comme au moins l'une parmi une image graphique commerciale et une image photographique, le procédé comprenant :

le calcul (S62) d'une distribution de fréquence de luminosité de composants de luminosité pour l'image d'entrée ;
le calcul (S63) d'une moyenne de composants de saturation pour l'image d'entrée ; et
la classification de l'image d'entrée comme l'une parmi l'image graphique commerciale (567) et l'image photographique (568), en fonction de la comparaison du résultat d'une fonction d'estimation (566) fondée sur la distribution de fréquence de luminosité calculée et la moyenne des composants de saturation, avec une valeur seuil, et la sortie d'un résultat de la classification.

**11.** Procédé selon la revendication 10, comprenant en outre la transformation (S61) de l'image d'entrée en des composants d'un espace de couleur luminosité-saturation pour générer au moins les composants de luminosité pour l'image d'entrée et les composants de saturation pour l'image d'entrée.

**12.** Procédé selon la revendication 10, comprenant en outre le calcul d'une distribution de fréquence des composants de luminosité pour l'image d'entrée, et
dans lequel la classification de l'image d'entrée est en outre fondée sur la distribution de fréquence calculée.

**13.** Procédé selon la revendication 12, dans lequel le calcul de la distribution de fréquence comprend :

la transformation des composants de luminosité pour l'image d'entrée dans une zone de fréquence ; et
le calcul d'une différence de fréquence entre des composants de fréquence adjacents dans la zone de fréquence.

**14.** Procédé selon la revendication 10, dans lequel l'image d'entrée est une image RVB.

**15.** Procédé selon la revendication 14, dans lequel les composants de luminosité pour l'image d'entrée et les composants de saturation pour l'image d'entrée résultent d'une transformation de l'image RVB dans l'espace de couleur luminosité-saturation, l'espace de couleur luminosité-saturation étant un espace de couleur CIELab ou un espace de couleur CIECAM02.

**16.** Procédé selon la revendication 10, dans lequel le calcul de la distribution de fréquence de luminosité comprend le calcul d'une différence de fréquence entre des composants de luminosité adjacents pour l'image d'entrée.

**17.** Procédé selon la revendication 10, dans lequel un composant de saturation pour l'image d'entrée est calculé en fonction d'une racine carrée d'une valeur obtenue en ajoutant un carré d'un composant « a » et un carré d'un composant « b » parmi des données Lab d'un espace de couleur CIELab.

**18.** Procédé selon la revendication 10, dans lequel, dans la classification de l'image d'entrée, la fonction d'estimation est identifiée en appliquant un algorithme de réseau neuronal.

**19.** Au moins un support comprenant un code lisible par un ordinateur pour commander au moins un élément de traitement pour mettre en oeuvre un procédé classifiant une image d'entrée comme au moins l'une parmi une image graphique commerciale et une image photographique, le procédé comprenant :

le calcul d'une distribution de fréquence de luminosité de composants de luminosité pour l'image d'entrée ;
le calcul d'une moyenne de composants de saturation pour l'image d'entrée ; et
la classification de l'image d'entrée comme l'une parmi l'image graphique commerciale et l'image photographique, en fonction de la comparaison d'une fonction d'estimation, en se fondant sur la distribution de fréquence de luminosité calculée et la moyenne des composants de saturation, avec une valeur seuil, et la sortie d'un résultat de la classification.

**20.** Support selon la revendication 19, dans lequel le procédé comprend en outre la transformation de l'image d'entrée en des composants d'un espace de couleur luminosité-saturation pour générer au moins les composants de luminosité pour l'image d'entrée et les composants de saturation pour l'image d'entrée.

# FIG. 1

# FIG. 2

IMAGE CLASSIFICATION SYSTEM (100)

INPUT IMAGE (RGB) → COLOR SPACE TRANSFORM UNIT (105)

LIGHTNESS → LIGHTNESS ANALYSIS UNIT (110) — LFD

SATURATION → SATURATION ANALYSIS UNIT (120) — Avg_C

LIGHTNESS → EDGE ANALYSIS UNIT (130) — FFD

IMAGE CLASSIFICATION UNIT (140) → PHOTO IMAGE

→ BUSINESS GRAPHIC IMAGE

EP 1 947 577 B1

# FIG. 3

```
                                S31                              S32
                             ╱                                ╱
         ┌──────────────────┐                    ┌──────────────────┐
RGB  →   │  RGB →  XYZ       │  →  XYZ  →         │  XYZ → Lab        │  →  Lab
         │  Transform        │                    │  Transform        │
         └──────────────────┘                    └──────────────────┘
```

# FIG. 4

```
                                                OBSERVATION
                                S31             ENVIRONMENT        S42
                             ╱                       ↓           ╱
         ┌──────────────────┐                    ┌──────────────────┐
RGB  →   │  RGB →  XYZ       │  →  XYZ  →         │  XYZ → JCh        │  →  JCh
         │  Transform        │                    │  Transform        │
         └──────────────────┘                    └──────────────────┘
```

# FIG. 5

# FIG. 6

START

COLOR SPACE TRANSFORM — S61

LIGHTNESS ANALYSIS — S62

SATURATION ANALYSIS — S63

EDGE ANALYSIS — S64

ESTIMATION FUNCTION CALCULATION — S65

DOES ESTIMATION FUNCTION EXCEED THRESHOLD VALUE? — S66

NO

YES

CLASSIFICATION INTO BUSINESS GRAPHIC IMAGE — S67

CLASSIFICATION INTO PHOTO IMAGE — S68

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 1020070002595

**Non-patent literature cited in the description**

• Color Management Default RGB Color Space sRGB. *IEC TC-1 00, IEC 61966-2-1,* 1999

• **NATHAN MORONEY ; MARK FAIRCHILD ; ROBERT HUNT ; CHANGJUN LI ; RONNIER LUO ; TODD NEWMAN.** The CIECAM02 Color Appearance Model. *IS&T/SID 10th Color Imaging Conference*